# EUROPÄISCHE PATENTSCHRIFT

(11) **EP 1 304 712 B1**
(45) Veröffentlichungstag und Bekanntmachung des Hinweises auf die Patenterteilung: **06.12.2006**
(21) Anmeldenummer: 02020719.7
(22) Anmeldetag: 14.09.2002
(51) Int. Cl.: H01H 13/70, B29C 45/14, B41M 5/26, B29C 59/16, B41J 5/12

(54) **Taste mit angespritzter Kappe**
Key with overmoulded cap
Touche avec capuchon surmoulé

(30) Priorität: 18.10.2001 DE 10151532
(43) Veröffentlichungstag der Anmeldung: 23.04.2003
(73) Patentinhaber: Rafi GmbH & Co. KG Elektrotechnische Spezialfabrik, 88276 Berg (DE)
(72) Erfinder: Raasch, Manfred, 88213 Ravensburg (DE); Wasmeier, Albert, 88273 Fronreute (DE)
(74) Vertreter: Engelhardt, Volker

(56) Entgegenhaltungen:
- EP-A- 0 130 424
- DE-A- 2 936 926
- DE-A- 19 652 253
- DE-A- 19 828 685
- DE-C- 19 537 142
- US-A- 4 442 055
- US-A- 4 460 534
- US-A- 5 635 927
- PATENT ABSTRACTS OF JAPAN vol. 2000, no. 16, 8. Mai 2001 (2001-05-08) & JP 2001 001642 A (FUJITSU TAKAMISAWA COMPONENT LTD), 9. Januar 2001 (2001-01-09)

## Beschreibung

Die Erfindung bezieht sich auf eine zweiteilige Taste nach dem Oberbegriff des Patentanspruches 1.

Aus der DE 29 36 926 C2 ist eine solche mittels Laserstrahlen beschriftete Taste bekannt, die beispielsweise als Massenware für Computertastaturen oder sonstige Werkzeugmaschinen als Bedienelement verwendet wird. Für solche Tasten ist es notwendig, daß diese auf einfache und unkomplizierte Weise beschriftbar sind, denn die Tasten werden ohne Beschriftung als Massenware gelagert und nach Auftragseingang wird die Beschriftung mittels eines Laserstrahls vorgenommen. Die Vorrichtung zur Beschriftung kann dann individuell erstellt werden, um die gewünschten Symbole auf die jeweilige Taste zu erzeugen.

Dies erfolgt dadurch, daß das Material, aus dem die Taste hergestellt ist, zumindest im Bereich der vorzunehmenden Beschriftung, also vorzugsweise in der Flächenmitte der Taste, aus einem Material gebildet ist, dessen Eigenschaften derart sind, daß mittels des Laserstrahles eine Verfärbung, beispielsweise ein Schwarz- oder Grauton, an der Oberfläche der Taste entsteht, so daß der Laserstrahl beim Nachfahren, beispielsweise des Buchstabens "E", auf diesen Linien die Verfärbung erzeugt und somit der Buchstabe "E" auf der Oberfläche der Taste erscheint.

Als nachteilig bei solchen Tasten hat sich herausgestellt, daß die Beschriftung oftmals ausbleicht oder ganz verschwindet, denn die Beschriftung ist vor Verschleiß von außen nicht geschützt. Insbesondere Reibung und Fremdpartikel, die erhöhte Reibungswerte erzeugen, beispielsweise Mehl in Bäckereien oder bei Gebrauch der Taste in einer Fischfabrik, ist dafür verantwortlich, daß die Beschriftung der einzelnen Taste ausbleicht und diese daher auszutauschen sind.

Auch in der WO 89/07302 ist eine Methode zur Laserbeschriftung einer Oberfläche beschrieben. Der Offenbarungsgehalt dieser Druckschrift geht jedoch über den in der DE 29 36 926 beschriebenen Stand der Technik nicht hinaus.

Aus der DE GM 94 07 014 ist ein zweiteiliger Tastenschalter zu entnehmen, der aus einem Grundkörper und einer Tastenkappe aus transparentem Material, der auf dem Grundkörper aufgeklebt ist, offenbart. Mittels der beispielsweise in der WO 89/07302 angesprochenen Laserverdampfungsmethode wird bei dem Tastenschalter nach der DE 94 07 014 U1 die transparente Tastenkappe mittels Laserapplationen, bei der lokale Schichten verdampft werden, beschriftet.

Als nachteilig bei diesem Tastenschalter ist anzusehen, daß eine nachträgliche Beschriftung der gesamten Taste nicht möglich ist, da der Grundkörper zu beschriften ist und danach die transparent ausgebildete Tastenkappe aufgeklebt wird. Eine nachträgliche Bearbeitung bzw. Beschriftung der gesamten Taste ist folglich nicht möglich. Dies verteuert jedoch die Lagerhaltung und stellt erhöhte Anforderungen an die Logistik, wenn derartige Tastenschalter eingesetzt werden.

Des weiteren ist dieser Tastenschalter für vollflächig umspritzte bzw. eingegossene Schaltfelder nur bedingt einsetzbar, da die Tastenhaube mit dem Grundkörper zu verkleben ist und somit eine bestimmte Abmessung aufweist, die in vollflächig umspritzte Schaltfelder nicht ohne Nachbearbeitung und damit mit einem zusätzlichen Arbeitsaufwand einzusetzen ist.

Aus der DE 197 37 417 A1 ist eine mehrteilige lichtdurchlässige metallisierte Gummitaste zu entnehmen. Dabei wird der aus Silikon gebildete Grundkörper durch mehrere Lackier- und teure Vakuumbeschichtungsvorgänge behandelt.

Anschließend erfolgt durch Laserapplation ein lokales Verdampfen der vakuumbeschichteten Metallschicht, so daß die gewünschte Beschriftung erzeugbar ist. Nach diesem Verfahrensschritt wird eine Lackschicht auf die Oberfläche aufgetragen, so daß die gesamte Taste vor Umwelteinflüssen geschützt ist.

Auch bei dieser Taste ist eine nachträgliche Beschriftung des Tastengrundkörpers nicht möglich, da die aufgetragene Lackschicht den Laserstrahl reflektiert und dadurch kann der Laserstrahl die Lackschicht nicht durchdringen, um bis auf die Oberfläche des Grundkörpers zu gelangen.

Es ist daher Aufgabe der Erfindung, eine Taste der eingangs genannten Gattung zu schaffen, deren Beschriftung nach der Herstellung der Taste individuell vorgenommen werden kann und die eine dauerhafte und trotz erhöhter Reibwerte während der Bedienung der Taste keinen Verschleiß aufweisende Beschriftung trägt. Die Beschriftung soll demnach während der Bedienung gegen Reibung und Verschmutzung geschützt sein. Darüber hinaus soll die Taste eine bedienerfreundliche Außenkontur aufweisen.

Diese Aufgabe wird erfindungsgemäß durch die Merkmale des kennzeichnenden Teils des Patentanspruches 1 gelöst.

Um die Taste dauerhaft, und zwar auch bei hohen Reibwerten, bedienen zu können, ist die Kappe mittels Materialverschmelzung fest mit dem Grundkörper verbunden.

Zur optisch besseren Lesbarkeit der Beschriftung auf der Taste ist die Kappe als Linse ausgebildet, so daß die auf der Taste angebrachte Beschriftung vergrößert dargestellt ist. Es ist auch denkbar, dass die Außenkontur der Kappe fühlbare Einkerbungen oder Vertiefungen aufweist, die als Blindenschrift oder als Buchstaben ausgebildet sind.

Um ein Abrutschen auf der Kappe zu vermeiden, ist diese konkav, konvex oder muldenartig ausgebildet.

Die Beschriftung auf der Taste wird dadurch hergestellt, daß die Kappe aus einem Material besteht, das Laserstrahlen zur Beschriftung des Grundkörpers ungehindert durchläßt oder daß der Laserstrahl durch die Materialeigenschaften und/oder durch die optische Ausbildung der Kappe fokussierbar ist.

Weitere vorteilhafte Weiterbildungen der Erfindung ergeben sich aus den Unteransprüchen.

Das Verfahren zur Herstellung einer solchen Taste, die aus einem Grundkörper besteht, der aus einem ganz oder teilweise durch Laserstrahlen beeinflussbaren Material gebildet ist, erfolgt beispielsweise durch die nachfolgend angegebenen Verfahrensschritte:
- ganz oder teilweises Aufbringen einer aus einem transparenten oder transluszenten Material bestehenden Kappe, insbesondere auf die Oberfläche des Grundkörpers, mittels eines Zwei-Komponenten-Spritzgußverfahrens,
- Beschriften des Grundkörpers mittels eines Laserstrahls, der durch die Kappe auf die Oberfläche des Grundkörpers geführt wird.

Dadurch, daß auf dem Grundkörper eine Kappe angebracht ist, durch die der Laserstrahl ungehindert auf die Oberfläche des zu beschriftenden Grundkörpers durchdringt, ist gewährleistet, daß sowohl die Beschriftung auf einfache und unkomplizierte Weise gefertigt werden kann, als auch daß der Grundkörper, auf den die Beschriftung aufgebracht ist, trotz erhöhter Reibwerte bei der Betätigung der Taste gegen Verschleiß geschützt ist. Somit ist die Lebensdauer der Taste erheblich erhöht und die Beschriftung verbleibt dauerhaft auf der Oberfläche des Grundkörpers.

Die Herstellung einer solchen Taste kann nach wie vor durch eine Laservorrichtung individuell vorgenommen werden. Umfangreiche logistische Planungen sind daher nicht erforderlich, da zunächst die Taste gefertigt wird und anschließend nach Bedarf die Beschriftung aufgebracht wird.

Dadurch, dass die Taste im Zwei-Komponenten-Spritzgußverfahren hergestellt ist, kann die Außenkontur der Kappe individuell gestaltet werden. Somit ist eine konvexe oder konkave Außenkontur der Kappe möglich bzw. in die Kappe können Vertiefungen eingearbeitet oder Erhebungen angeformt sein, die ein Blindenschriftzeichen oder einen fühlbaren Buchstaben ergeben.

In der Zeichnung ist ein erfindungsgemäßes Ausführungsbeispiel dargestellt, das nachfolgend näher erläutert wird. Im einzelnen zeigt:
- Figur 1: den Herstellungsprozeß für eine Taste mit einer Kappe und einen Grundkörper in einer Spritzgußform, im Schnitt und
- Figur 2: die Taste gemäß Figur 1 nach Fertigstellung während die Beschriftung aufgebracht wird.

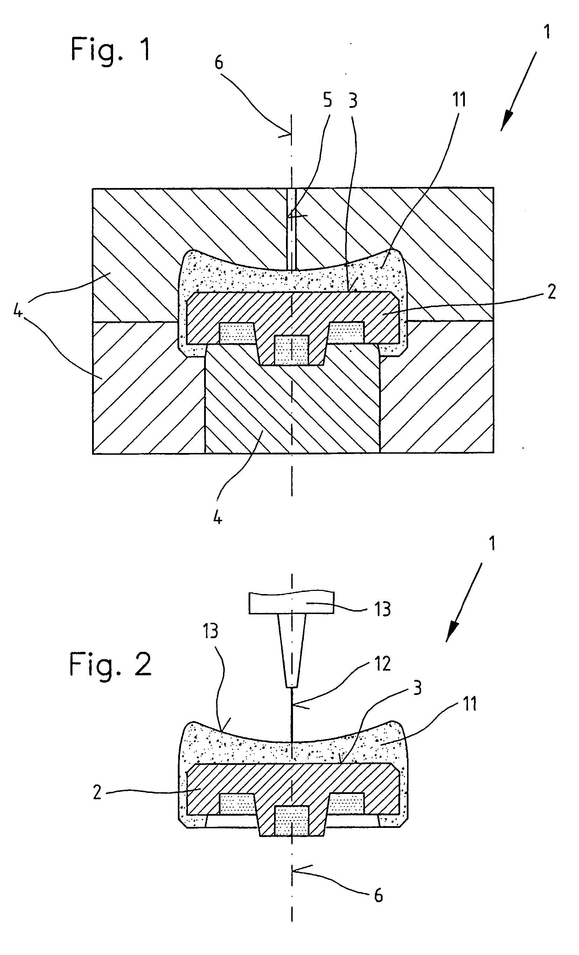

In Figur 1 ist eine zweiteilige aus einem Grundkörper 2 und einer Kappe 11 bestehende Taste 1, die in einer Spritzgußform 4 eingesetzt ist, dargestellt. Die aus drei trennbaren Teilen bestehende Spritzgußform 4 umschließt den Grundkörper 2 derart, daß zwischen diesem und der Spritzgußform 4 ein Zwischenraum gebildet ist, der sich sowohl entlang der Oberfläche 3 des Grundkörpers 2 als auch entlang der Stirnseiten und der Unterkanten erstreckt. Gegenüberliegend zu der Oberfläche 3 des Grundkörpers 2 ist ein Einlaßkanal 5 in der Spritzgußform 4 eingearbeitet, durch den eine transparente oder transluszente Masse in den Zwischenraum eingefüllt wird und diesen ausfüllt. Die somit erstellte Kappe 11 umhüllt den Grundkörper 2 und aufgrund von Materialverschmelzung ist diese fest mit dem Grundkörper 2 verbunden.

Gemäß Figur 2 entsteht somit die zweiteilige Taste 1 mit einem Grundkörper 2 und die diesen umschließende Kappe 11. Die aufzubringende Beschriftung wird mittels einer Laservorrichtung 13 aufgebracht. Der von der Laservorrichtung 13 emittierte Laserstrahl 12 trifft senkrecht auf die Oberfläche 3 des Grundkörpers 2 auf. Der Laserstrahl 12 verläuft somit fluchtend zu der Querachse 6 der Taste 1.

Die Kappe 11 ist aus einem transparenten oder transluszenten Material hergestellt, um die Beschriftung auf der Oberfläche 3 des Grundkörpers 2 nicht zu verdecken. Darüber hinaus kann die Kappe 11 als Lupe ausgebildet sein, so daß diese optische Eigenschaften aufweist, durch die die unter der Kappe 11 erzeugte Beschriftung von außen betrachtet größer und deutlicher erscheint.

Auch bei der Beschriftungsherstellung mittels des Laserstrahls 12 kann die Taste 1 vorteilhafte Eigenschaften aufweisen, wodurch der Laserstrahl 12 durch die Kappe 11 gebündelt oder fokussiert wird, so daß eine exakte Beschriftung der Oberfläche 3 des Grundkörpers 2 durchgeführt werden kann.

Die Außenkontur 13 der Kappe 11 ist konvex gekrümmt ausgebildet, so dass die Kappe 11 eine zu dem Grundkörper 2 unterschiedliche Form aufweist und daher eine sichere Bedienung der Taste 1 gewährleistet ist, da die Finger des Benutzers durch die Kappe 11 auf der Taste 1 geführt gehalten sind.

Darüber hinaus können in die Außenkontur 13 Einkerbungen eingearbeitet oder Erhebungen angeformt sein, die als Buchstaben oder Blindenschrift ausgebildet sind.

Die Materialeigenschaften der Kappe 11 sind derart zu wählen, daß diese während der Bestrahlung mittels des Laserstrahles 12 ihre Farbe oder Form nicht verändert. Dagegen ist das Material des Grundkörpers 2 zumindest in dem Bereich, in dem eine Beschriftung vorgesehen ist, aus einem Material zu erstellen, das durch den Laserstrahl 12 beeinflußbar ist, so daß sich die Oberfläche 3 des derart hergestellten Grundkörpers 2 mittels der Beaufschlagung durch den Laserstrahl 12 schwarz oder grau verfärbt, so daß auf der Oberfläche 3 die gewünschten Symbole sichtbar sind.

## Patentansprüche

1. Zweiteilige Taste (1) mit einem Grundkörper (2), der ganz oder teilweise aus einem durch Laserstrahlen (12) beeinflußbaren Material gebildet ist, und mit einer transparenten oder transiuszenten Kappe (11), die ganz oder teilweise auf der Oberfläche (3) des Grundkörpers (2) angeordnet ist,
**dadurch gekennzeichnet,**
**dass** die Kappe (11) mittels eines Zwei-Komponenten-Spritzgußverfahrens auf den Grundkörper (2) aufgebracht ist und dass ein zur Beschriftung des Grundkörpers (2) vorhandener Laserstrahl (12) durch die Materialeigenschaften und/oder durch die optische Ausbildung der Kappe (11) fokussierbar ist.

2. Taste nach Anspruch 1,
**dadurch gekennzeichnet,**
**daß** die Kappe (11) mittels Materialverschmelzung fest mit dem Grundkörper (2) verbunden ist.

3. Taste nach Anspruch 1,
**dadurch gekennzeichnet,**
**daß** die Kappe (11) eine von der Kontur des Grundkörpers (2) verschiedenartige Außenkontur (13) aufweist.

4. Tastenkörper nach einem oder mehreren
der vorgenannten Ansprüche,
**dadurch gekennzeichnet,**
**daß** die Kappe (11) als Linse ausgebildet ist.

5. Taste nach einem oder mehreren
der vorgenannten Ansprüche,
**dadurch gekennzeichnet,**
**daß** die Kappe (11) aus einem verschleißfesten Material gebildet ist.

6. Taste nach einem oder mehreren
der vorgenannten Ansprüche,
**dadurch gekennzeichnet,**
**daß** die Kappe (11) aus einem Material besteht, durch das Laserstrahlen (12) zur Beschriftung des Grundkörpers ungehindert durchlässig sind.

7. Taste nach einem oder mehreren
der vorgenannten Ansprüche,
**dadurch gekennzeichnet,**
**dass** die Außenkontur (13) der Kappe (11) fühlbare Erhebungen oder Vertiefungen , die als Blindenschrift oder Buchstaben ausgebildet sind, aufweist.

8. Taste nach einem oder mehreren
der vorgenannten Ansprüche,
**dadurch gekennzeichnet,**
**dass** die Außenkontur (13) der Kappe (11) konvex, konkav oder muldenartig gekrümmt ausgebildet ist.

## Claims

1. A two-piece button with a base element (2) formed in whole or in part from a material that can be influenced by laser beams (12) and with a transparent or translucent cap (11) that is arrange in whole or in part on the surface (3) of the base element (2),
**characterized in that**,
the cap (11) is applied to the base element (2) by means of a two-component injection molding process and that a laser beam (12) for labeling the base element (2) can be focused by the material properties and/or by the optical configuration of the cap (11).

2. The button in accordance with Claim 1,
**characterized in that**,
the cap (11) is firmly connected to the base element (2) by fusion of the material.

3. The button in accordance with Claim 1,
**characterized in that**,
the cap (11) has an external contour (13) that is of a different nature from the contour of the base element (2).

4. A button element in accordance with one or more of the aforementioned claims,
**characterized in that**,
the cap (11) is configured as a lens.

5. The button in accordance with one or more of the aforementioned claims,
**characterized in that**,
the cap (11) is made from a wear-resistant material.

6. The button in accordance with one or more of the aforementioned claims,
**characterized in that**,
the cap (11) is made from a material that allows the unhindered passage of laser beams (12) for labeling the base element.

7. The button in accordance with one or more of the aforementioned claims,
**characterized in that**,
the external contour (13) of the cap (11) has perceptible elevations or indentations configured as Braille script or letters.

8. The button in accordance with one or more of the aforementioned claims,
**characterized in that**,
the external contour (13) of the cap (11) is convex, concave or has a trough-like shape.

## Revendications

1. Touche divisée (1) composée d'un corps principal (2) en matériel qui peut être influencé entièrement ou partiellement par des rayons laser (12), et d'un capot transparent ou translucide (11) disposé entièrement ou partiellement sur la surface (3) du corps principal (2),
**caractérisée en ce que**
le capot (11) est fixé au moyen d'un procédé de moulage par injection à deux composants sur le corps principal (2) et qu'un rayon laser (12) prévu pour appliquer une écriture sur le corps principal (2) se laisse focaliser par les propriétés du matériau et/ou par la conception optique du capot (11).

2. Touche d'après la revendication 1,
**caractérisée en ce que**
le capot (11) est rigidement lié par fusion de matériel au corps principal (2).

3. Touche d'après la revendication 1,
**caractérisée en ce que**
le contour extérieur (13) du capot (11) se distingue de celui du corps principal (2).

4. Touche d'après une ou plusieurs des revendications précédentes,
**caractérisée en ce que**
le capot (11) est conçu sous la forme d'une lentille.

5. Touche d'après une ou plusieurs des revendications précédentes,
**caractérisée en ce que**
le capot (11) est réalisé en matériau résistant à l'usure.

6. Touche d'après une ou plusieurs des revendications précédentes,
**caractérisée en ce que**
le capot (11) est réalisé en matériau laissant passer sans entrave les rayons laser (12) servant à appliquer de l'écriture sur le corps principal (2).

7. Touche d'après une ou plusieurs des revendications précédentes,
**caractérisée en ce que**
le contour extérieur (13) du capot (11) comporte des bossages ou des creux sensibles conçus sous la forme de braille ou de lettres.

8. Touche d'après une ou plusieurs des revendications précédentes,
**caractérisée en ce que**
le contour extérieur (13) du capot (11) est conçu sous une forme convexe, concave ou creusée.
